(19) Europäisches Patentamt / European Patent Office / Office européen des brevets

(11) **EP 3 153 273 A1**

(12) **EUROPEAN PATENT APPLICATION**
published in accordance with Art. 153(4) EPC

(43) Date of publication:
**12.04.2017 Bulletin 2017/15**

(21) Application number: **15812930.4**

(22) Date of filing: **23.03.2015**

(51) Int Cl.:
**B23K 26/34** (2014.01)   **B23K 26/21** (2014.01)
**B29C 67/00** (2017.01)

(86) International application number:
**PCT/JP2015/058784**

(87) International publication number:
**WO 2016/151740 (29.09.2016 Gazette 2016/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Technology Research Association for Future Additive Manufacturing Tokyo 103-0027 (JP)**

(72) Inventors:
• **GOYA, Saneyuki**
  **Yokohama-shi**
  **Kanagawa 236-8515 (JP)**
• **WATANABE, Toshiya**
  **Yokohama-shi**
  **Kanagawa 236-8515 (JP)**
• **DANNO, Minoru**
  **Yokohama-shi**
  **Kanagawa 236-8515 (JP)**

(74) Representative: **TBK**
  **Bavariaring 4-6**
  **80336 München (DE)**

(54) **LASER HEATING CONTROL MECHANISM, LASER HEATING CONTROL METHOD, LASER HEATING CONTROL PROGRAM, AND THREE-DIMENSIONAL MOLDING DEVICE**

(57) A laser heating control mechanism according to this invention is a mechanism that performs proper adjustment of preheating or postheating by a simple operation in three-dimensional shaping. The laser heating control mechanism is a laser heating control mechanism for preheating or postheating a heating target object. The laser heating control mechanism includes an optical fiber that transmits a laser beam and radiates the laser beam from an opening end face, a collimation optical system that fucuses the laser beam radiated from the opening end face onto the heating target object, and an irradiation range adjustment mechanism that adjusts the distance between the opening end face and the collimation optical system along the irradiation axis of the laser beam so as to irradiate the heating target object with the laser beam at a predetermined beam diameter.

F I G. 1

**Description**

TECHNICAL FIELD

The present invention relates to a laser heating technique for preheating or postheating in a three-dimensional shaping apparatus.

BACKGROUND ART

In the above technical field, patent literature 1 discloses a technique of converting a laser beam into parallel light through a lens for collimation, then focusing the light through a lens for focus position adjustment, and irradiating a photo-curing resin with the light to perform optical shaping. Patent literature 2 discloses a technique of splitting one laser beam into a high-energy laser beam and a low-energy laser through different convex lenses to use the high-energy laser beam for melting a metal powder and the low-energy laser beam for preheating or postheating the metal powder.

CITATION LIST

PATENT LITERATURE

Patent literature 1: Japanese Patent Laid-Open No. 10-128854
Patent literature 2: Japanese Patent Laid-Open No. 2002-069507

SUMMARY OF THE INVENTION

TECHNICAL PROBLEM

However, when the technique described in patent literature 1 is applied to adjustment of the irradiation range of a laser beam necessary for preheating or postheating, adjustment of the lens for collimation and the lens for focus position adjustment becomes necessary, impairing convenience. In the technique disclosed in patent literature 2, adjustment of preheating, melting, and postheating is integral, and proper adjustment of preheating or postheating cannot be performed by a simple operation.
The present invention enables to provide a technique of solving the above-described problem.

SOLUTION TO PROBLEM

One aspect of the present invention provides a laser heating control mechanism for one of preheating and postheating of a heating target object, comprising:

an optical fiber that transmits a laser beam and radiates the laser beam from an opening end face;
a collimation optical system that fucuses the laser beam radiated from the opening end face onto the heating target object; and
an irradiation range adjustment mechanism that adjusts a distance between the opening end face and the collimation optical system along an irradiation axis of the laser beam so as to irradiate the heating target object with the laser beam at a predetermined beam diameter.

Another aspect of the present invention provides a three-dimensional shaping apparatus comprising:

the above-described laser heating control mechanism; and
a melting laser heating control mechanism that melts the heating target object.

Still other aspect of the present invention provides a laser heating control method in a laser heating mechanism for one of preheating and postheating of a heating target object, the laser heating mechanism including an optical fiber that transmits a laser beam and radiates the laser beam from an opening end face, and a collimation optical system that fucuses the laser beam radiated from the opening end face onto the heating target object, the method comprising:

adjusting a distance between the opening end face and the collimation optical system along an irradiation axis of the laser beam so as to irradiate the heating target object with the laser beam at a predetermined beam diameter; and adjusting a focusing position of the laser beam on the heating target object by a reflecting mirror provided between the collimation optical system and the heating target object.

Still other aspect of the present invention provides a laser heating control program in a laser heating mechanism for one of preheating and postheating of a heating target object, the laser heating mechanism including an optical fiber that transmits a laser beam and radiates the laser beam from an opening end face, and a collimation optical system that fucuses the laser beam radiated from the opening end face onto the heating target object, the program causing a computer to execute:

adjusting a distance between the opening end face and the collimation optical system along an irradiation axis of the laser beam so as to irradiate the heating target object with the laser beam at a predetermined beam diameter; and adjusting a focusing position of the laser beam on the heating target object by a reflecting mirror provided between the collimation optical system and the heating target object.

ADVANTAGEOUS EFFECTS OF INVENTION

According to the present invention, proper adjustment of preheating or postheating can be performed by a simple operation in three-dimensional shaping.

BRIEF DESCRIPTION OF DRAWINGS

Fig. 1 is a view showing the arrangement of a laser heating control mechanism according to the first embodiment of the present invention;
Fig. 2 is a view showing the arrangement of a laser heating control mechanism for preheating or postheating according to the second embodiment of the present invention;
Fig. 3A is a view for explaining the principle of the laser heating control mechanism for preheating or postheating according to the second embodiment of the present invention;
Fig. 3B is a view for explaining the principle of a laser heating control mechanism according to a prerequisite technique;
Fig. 4 is a view for explaining a beam diameter on a heating target object according to the second embodiment of the present invention;
Fig. 5A is a view showing the arrangement of a laser heating assembly according to the second embodiment of the present invention;
Fig. 5B is a view showing the arrangement of a three-dimensional shaping apparatus including the laser heating assembly according to the second embodiment of the present invention;
Fig. 6A is a block diagram showing the arrangement of a three-dimensional shaping system including the three-dimensional shaping apparatus according to the second embodiment of the present invention;
Fig. 6B is a block diagram showing the arrangement of a laser heating controller according to the second embodiment of the present invention;
Fig. 7A is a table showing the structure of data used by the laser heating controller according to the second embodiment of the present invention;
Fig. 7B is a table showing the structure of data used by the laser heating controller according to the second embodiment of the present invention;
Fig. 8 is a flowchart showing the processing procedures of the laser heating controller according to the second embodiment of the present invention; and
Fig. 9 is a view showing the arrangement of a laser heating assembly according to the third embodiment of the present invention.

DESCRIPTION OF THE EMBODIMENTS

A preferred embodiment(s) of the present invention will now be described in detail with reference to the drawings. It should be noted that the relative arrangement of the components, the numerical expressions and numerical values set forth in these embodiments do not limit the scope of the present invention unless it is specifically stated otherwise.

[First Embodiment]

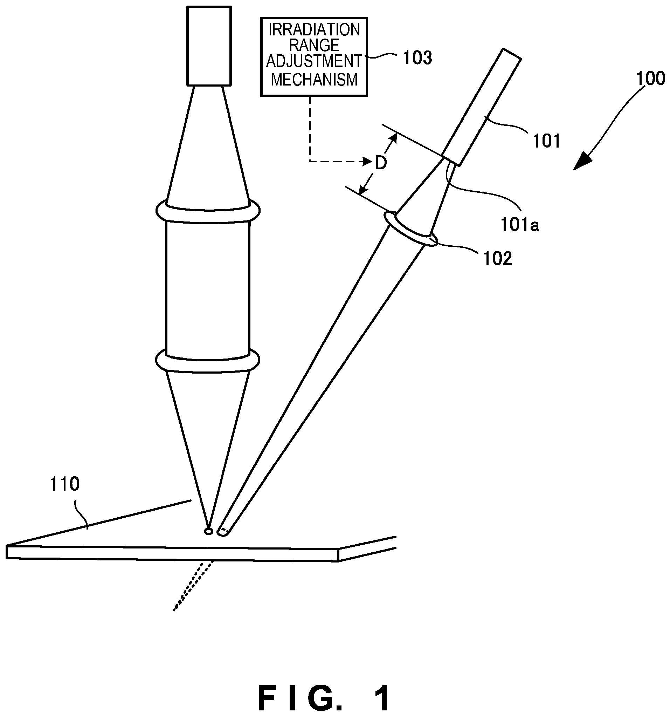

A laser heating control mechanism 100 according to the first embodiment of the present invention will be described with reference to Fig. 1. The laser heating control mechanism 100 is a mechanism for preheating or postheating a heating target object.

As shown in Fig. 1, the laser heating control mechanism 100 includes an optical fiber 101, a collimation optical system 102, and an irradiation range adjustment mechanism 103. The optical fiber 101 transmits a laser beam and radiates it from an opening end face 101a. The collimation optical system 102 fucuses the laser beam radiated from the opening end face 101a onto a heating target object 110. The irradiation range adjustment mechanism 103 adjusts a distance D between the opening end face 101a and the collimation optical system 102 along the irradiation axis of a laser beam so as to irradiate the heating target object 110 with a laser beam at a predetermined beam diameter.

According to the first embodiment, since the beam diameter of a laser beam on a heating target object is controlled by one collimation optical system in three-dimensional shaping, adjustment of preheating or postheating can be performed by a simple operation.

[Second Embodiment]

A laser heating control mechanism and a three-dimensional shaping apparatus using it according to the second embodiment of the present invention will be described. The laser heating control mechanism according to this embodiment controls the beam diameter on the surface of a heating target object to be preheated or postheated, by moving the position of one collimation optical system constituted by a plurality of lenses so as to adjust the distance between the collimation optical system and the opening end face of an optical fiber for transmitting a laser beam. Also, a fixed reflecting mirror and a movable reflecting mirror are provided between the collimation optical system and the surface of the heating target object, and the beam position is controlled by adjusting the rotation position of the movable reflecting mirror. If the beam diameter is smaller than a desired diameter, the beam is oscillated by the movable reflecting mirror to ensure the desired beam diameter. Further, the intensity of the laser beam is controlled in consideration of the material of a heating target object, the shaped object, the lamination thickness, the beam diameter, the scan speed, and the like.

«Laser Heating Control Mechanism for Preheating or Postheating>>

(Arrangement)

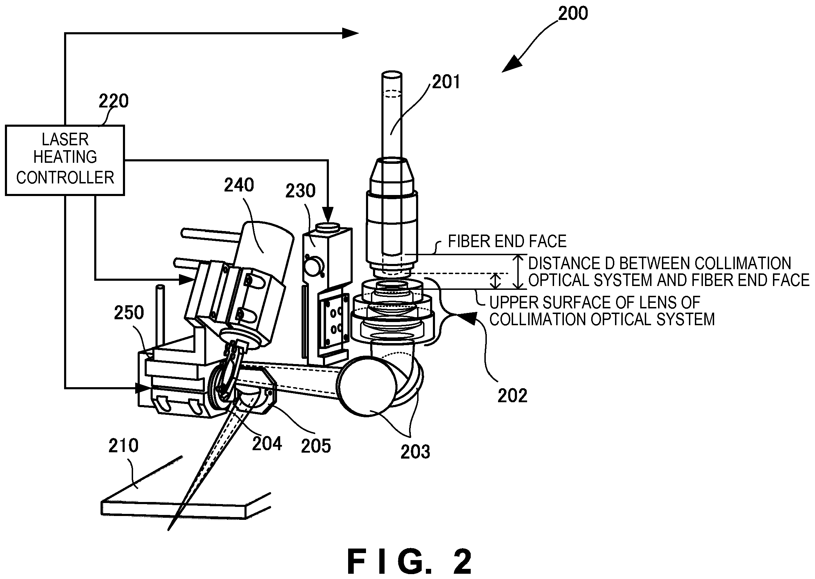

Fig. 2 is a view showing the arrangement of a laser heating control mechanism 200 for preheating or postheating according to this embodiment. The laser heating control mechanism 200 for preheating or postheating according to this embodiment is a control mechanism for preheating or postheating provided separately from a laser heating control mechanism for melting in a three-dimensional shaping apparatus that generates a three-dimensional shaped object while melting a material by a laser beam. Although a laser beam oscillator is not illustrated in Fig. 2, a laser beam to be oscillated is a laser beam for preheating or a laser beam for postheating that is lower in energy than a laser beam for melting a heating target object.

The laser heating control mechanism 200 for preheating or postheating includes an optical fiber 201, a collimation optical system 202, fixed reflecting mirrors 203, a first movable reflecting mirror 204, and a second movable reflecting mirror 205. The optical fiber 201 transmits a laser beam oscillated from the laser beam oscillator, and radiates it from the opening end face to the collimation optical system 202. The collimation optical system 202 collimates the laser beam radiated from the opening end face of the optical fiber 201. The fixed reflecting mirrors 203 reflect the laser beam collimated by the collimation optical system 202 from the vertical direction to the horizontal direction. The first movable reflecting mirror 204 and the second movable reflecting mirror 205 reflect the laser beam in the horizontal direction traveling from the fixed reflecting mirrors 203 toward a preheating or postheating position associated with the melting position of a heating target object 210.

The laser heating control mechanism 200 for preheating or postheating includes a laser heating controller 220 that adjusts the position of the collimation optical system 202 and the angles of the first movable reflecting mirror 204 and second movable reflecting mirror 205 in order to fucus a laser beam to the preheating or postheating position of the heating target object 210. The laser heating controller 220 may be controlled by software, be constituted by hardware, or be a one-chip IC that is controlled by a microprogram. The laser heating controller 220 controls a collimation optical system driver 230 to move the collimation optical system 202, and adjust the distance between the collimation optical system 202 and the opening end face of the optical fiber 201, thereby setting the beam diameter of a laser beam for preheating or postheating on the heating target object 210. The laser heating controller 220 controls a first movable reflecting mirror driver 240 to rotate the first movable reflecting mirror 204, and move the beam position of a laser beam on the heating target object 210 in the left-and-right direction in Fig. 2, thereby setting the beam position of the laser beam for preheating or postheating on the heating target object 210. Also, the laser heating controller 220 controls a second movable reflecting mirror driver 250 to rotate the second movable reflecting mirror 205, and move the beam position of a laser beam on the heating target object 210 in the front-and-back direction on the paper surface in Fig. 2, thereby setting the beam position of the laser beam for preheating or postheating on the heating target object 210.

Note that the collimation optical system 202 is constituted by three lenses in Fig. 2, but is not limited to this. The collimation optical system 202 may be implemented by one lens or an arbitrary number of lenses.

(Prerequisite Technique)

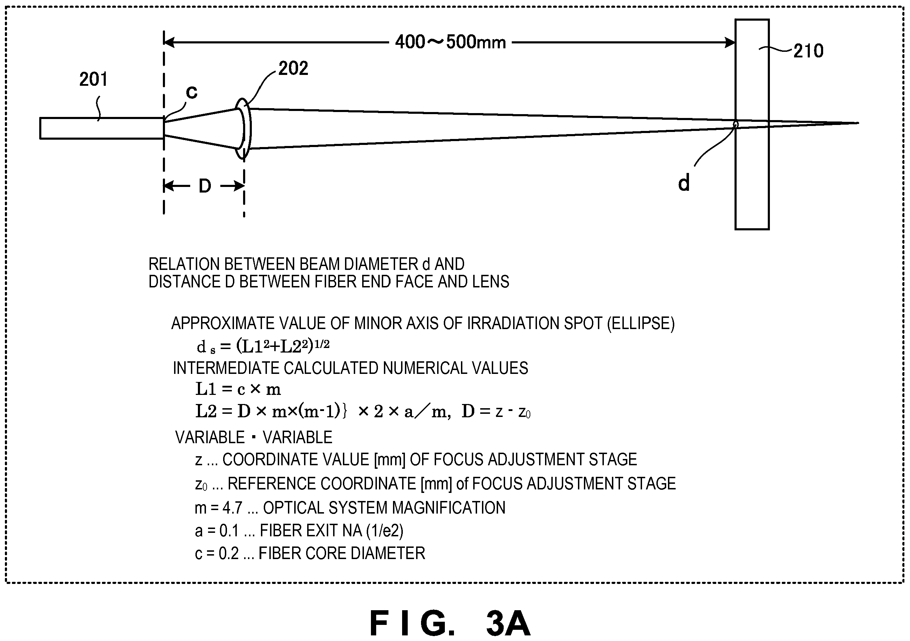

A conventional prerequisite technique of setting the beam diameter of a laser beam will be explained before explaining setting of the beam diameter of a laser beam by one collimation optical system according to this embodiment with reference to Fig. 3A.

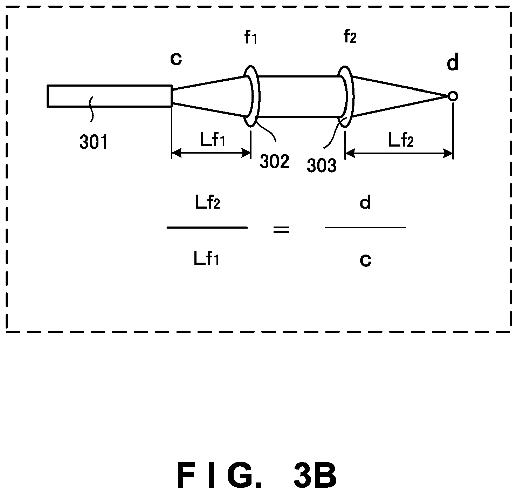

Fig. 3B is a view for explaining the principle of a laser heating control mechanism according to the prerequisite technique. In Fig. 3B, a predetermined beam diameter is set from a laser beam by two optical systems. The two optical systems are a collimation optical system 302 for generating parallel light from a laser beam that has been radiated from the opening end face of an optical fiber 301 and has a numerical aperture (NA), and a focusing optical system 303 for focusing parallel light.

In forming the spot of a laser beam by the two optical systems, the ratio between a core diameter c of the opening end face of the optical fiber 301 and a spot diameter d is equal to the ratio between a distance Lf1 from the opening end face of the optical fiber 301 to the collimation optical system 302, and a distance Lf2 from the focusing optical system 303 to the spot position.

However, in the laser beam focusing mechanism of Fig. 3B, the two optical systems are provided between the opening end face of the optical fiber 301 and the spot position, so a distance of a certain length or more is necessary. Adjusting the spot diameter at the same spot position requires a change of the two optical systems or complicated position adjustment. Proper adjustment of preheating or postheating cannot be performed by a simple operation.

(Principle)

Fig. 3A is a view for explaining the principle of the laser heating control mechanism 200 for preheating or postheating according to this embodiment. In Fig. 3A, a predetermined beam diameter is set from a laser beam by one optical system. The one optical system is the collimation optical system 202 for generating light to be fucused from a laser beam that has been radiated from the opening end face of the optical fiber 201 and has the NA.

In forming the spot of a laser beam by the one optical system, the beam diameter d on the heating target object 210 can be adjusted by adjusting the distance D from the opening end face of the optical fiber 201 to the collimation optical system 202. That is, in this embodiment, the beam diameter d on the heating target object 210 is not implemented by complicated adjustment of the spot diameter, but the beam diameter of a fucused laser beam is implemented by arranging the heating target object 210 to a predetermined position (changing the focusing distance of the laser beam by the position of the collimation optical system 202).

(Beam Diameter)

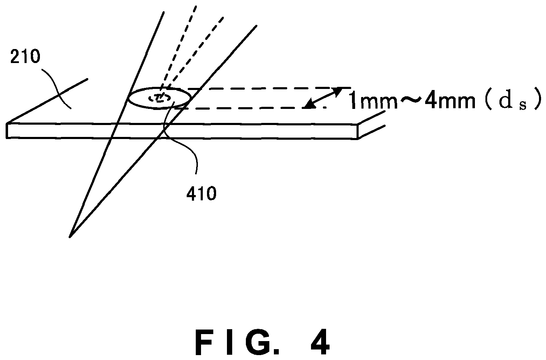

Fig. 4 is a view for explaining the beam diameter on the heating target object according to this embodiment. As shown in Fig. 4, the beam diameter is increased by prolonging the focusing position of a laser beam, and decreased by shortening it. In this embodiment, the minor axis (beat width) of the beam diameter is adjusted within the range of 1 mm to 4 mm, but is not limited to this. When increasing the major axis of the beam diameter to 10 mm or 20 mm, this is implemented by finely oscillating the movable reflecting mirrors 204 and 205, which will be described later.

Note that Fig. 3A shows, by concrete numerical values, the relationship between the distance D from the opening end face of the optical fiber 201 to the collimation optical system 202, and the beam diameter d on the heating target object 210.

(Relation between Beam Diameter d and Distance D between Opening End Face of Optical Fiber and Collimation Optical System)

• Approximate value of the minor axis of the irradiation spot (ellipse)

$$d_s = (L1^2 + L2^2)^{1/2}$$

• Intermediate calculated numerical values

$$L1 = c \times m$$

$$L2 = D \times \{m \times (m - 1)\} \times 2 \times a/m, D = z - z_0$$

• Variable · variable

$z$ ... coordinate value [mm] of the focus adjustment stage
$z_0$ ... reference coordinate [mm] of the focus adjustment stage
$m = 4.7$ ... optical system magnification
$a = 0.1$ ... fiber exit NA (1/e2)
$c = 0.2$ ... fiber core diameter

«Laser Heating Assembly»

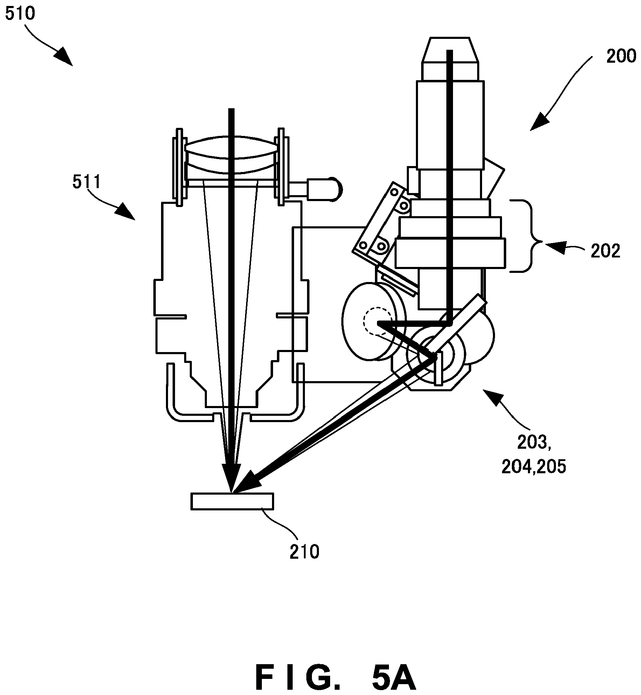

Fig. 5A is a view showing the arrangement of a laser heating assembly 510 according to this embodiment. In Fig. 5A, the same reference numerals as those in Fig. 2 denote the same parts, and a description thereof will not be repeated. The arrangement in Fig. 5A is merely an example, and the laser heating assembly 510 is not limited to this arrangement.
The laser heating assembly 510 includes a laser heating control mechanism 511 for melting, and the laser heating control mechanism 200 for preheating or postheating according to this embodiment. The laser heating control mechanism 200 for preheating or postheating according to this embodiment sets a beam diameter and a beam position based on the spot position of a laser beam where the laser heating control mechanism 511 for melting performs melting, the material of the heating target object 210, the scan speed, and the like. Then, the laser heating control mechanism 200 for preheating or postheating according to this embodiment executes adjustment.

«Three-dimensional Shaping Apparatus»

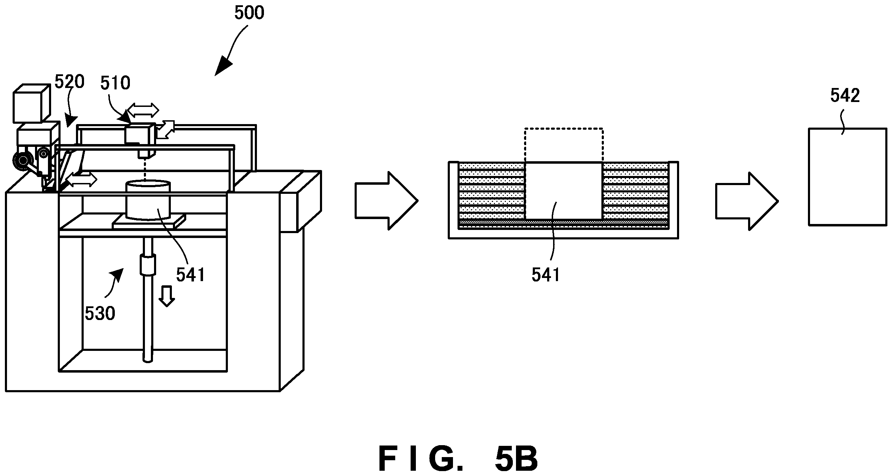

Fig. 5B is a view showing the arrangement of a three-dimensional shaping apparatus 500 including the laser heating assembly 510 according to this embodiment. Note that the same reference numerals as those in Fig. 5A denote the same parts, and a description thereof will not be repeated.
The three-dimensional shaping apparatus 500 includes the laser heating assembly 510 including the laser heating control mechanism 200 for preheating or postheating according to this embodiment, a recoater serving as a material supply control mechanism 520, and a shaped object support table control mechanism 530 that moves down by every lamination thickness.
A three-dimensional shaped object 542 is shaped by melting a material by every lamination thickness in the range of the three-dimensional shaped object, and combining the layers. Fig. 5B shows a three-dimensional shaped object 541 during lamination.
In this three-dimensional lamination shaping, preheating is performed to increase the shaping speed and prevent a problem arising from abrupt heating. In addition, postheating is performed to prevent a problem arising from abrupt cooling after heating.
Note that the arrangement of the three-dimensional shaping apparatus including the laser heating control mechanism 200 for preheating or postheating according to this embodiment is not limited to one shown in Fig. 5B.

<<Three-dimensional Shaping System>>

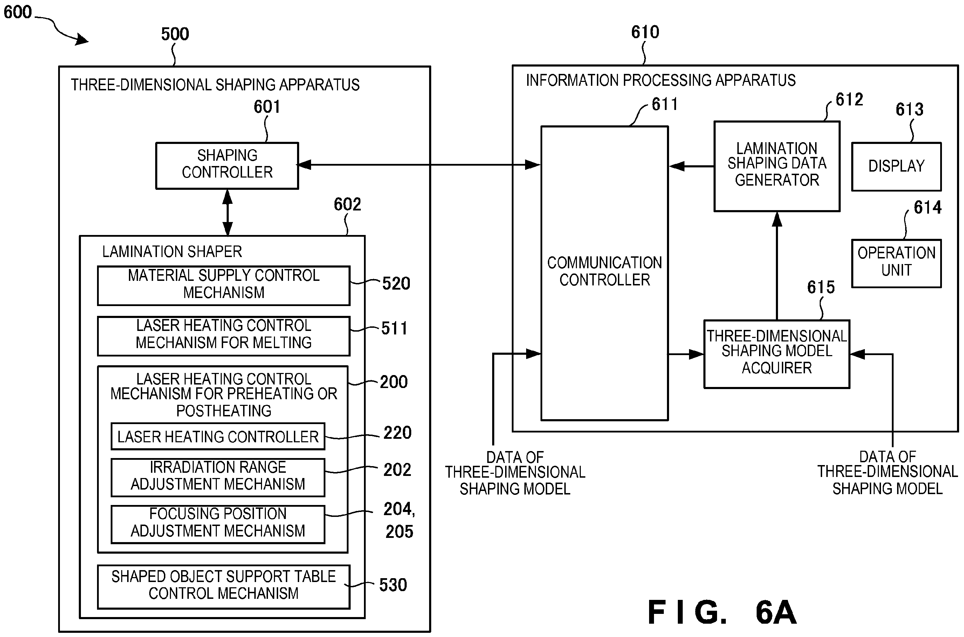

Fig. 6A is a block diagram showing the arrangement of a three-dimensional shaping system 600 including the three-dimensional shaping apparatus 500 according to this embodiment. Note that the same reference numerals as those in Figs. 5A and 5B denote the same parts, and a description thereof will not be repeated.
The three-dimensional shaping system 600 includes the three-dimensional shaping apparatus 500 including the laser heating control mechanism 200 for preheating or postheating according to this embodiment, and an information processing apparatus 610 that generates lamination shaping data for lamination shaping of a three-dimensional shaping model.

The information processing apparatus 610 includes a communication controller 611, a lamination shaping data generator 612, a display 613, an operation unit 614, and a three-dimensional shaping model acquirer 615. The communication controller 611 controls communication with the three-dimensional shaping apparatus 500 or another apparatus. The lamination shaping data generator 612 generates lamination shaping data for performing lamination shaping by the three-dimensional shaping apparatus 500 from data of a three-dimensional shaping model acquired by the three-dimensional shaping model acquirer 615. The display 613 generates a three-dimensional shaping model acquired by the three-dimensional shaping model acquirer 615, a lamination shaping state, or the like in a virtual space, and displays it. The display 613 also displays a processing menu and the like. The operation unit 614 inputs instructions for acquisition of data of a three-dimensional shaping model, the generator of lamination shaping data, and the like from the user, or parameters to be used and the like. The three-dimensional shaping model acquirer 615 acquires data of a three-dimensional shaping model from a storage medium or another apparatus via the communication controller 611.

The three-dimensional shaping apparatus 500 includes a shaping controller 601 and a lamination shaper 602. The shaping controller 601 receives lamination shaping data of a three-dimensional shaping model from the information processing apparatus 610, and controls the lamination shaper 602 to laminate and shape a three-dimensional shaped object. The lamination shaper 602 includes the material supply control mechanism 520, the laser heating control mechanism 511 for melting, the laser heating control mechanism 200 for preheating or postheating according to this embodiment, and the shaped object support table control mechanism 530. The laser heating control mechanism 200 for preheating or postheating according to this embodiment includes the laser heating controller 220, the collimation optical system 202 serving as an irradiation range adjustment mechanism, and the movable reflecting mirrors 204 and 205 serving as a focusing position adjustment mechanism.

Note that data of a three-dimensional shaping model is generated outside in Fig. 6A, but may be generated by the information processing apparatus 610. Also, the information processing apparatus 610 may be assembled in the three-dimensional shaping apparatus 500.

<<Arrangement of Laser Heating Controller>>

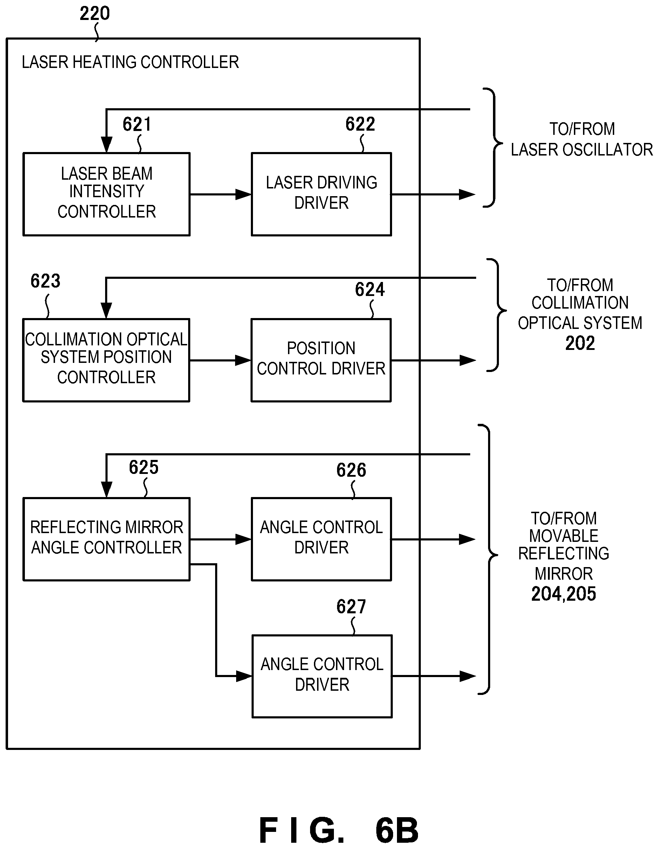

Fig. 6B is a block diagram showing the arrangement of the laser heating controller 220 according to this embodiment. Note that the laser heating controller 220 may be implemented by software, hardware, or a one-chip IC that is executed by a microprogram.

The laser heating controller 220 includes a laser beam intensity controller 621, a laser driving driver 622, a collimation optical system position controller 623, a position control driver 624, a reflecting mirror angle controller 625, an angle control driver 626, and an angle control driver 627.

The laser beam intensity controller 621 controls the intensity of a laser oscillated from the laser oscillator. Note that the intensity of the laser is set based on the material of a heating target object to be laminated and shaped, the lamination thickness, the scan speed, the irradiation area on the heating target object, and the like. The laser driving driver 622 is a driver that drives the laser oscillator at an intensity set by the laser beam intensity controller 621.

The collimation optical system position controller 623 controls the position of the collimation optical system in order to generate a beam diameter of a laser beam that corresponds to a target irradiation area on a heating target object. The beam diameter of the laser beam is set based on the irradiation area and beat width by the laser heating control mechanism 511 for melting, the material of a heating target object, the lamination thickness, the scan speed, and the like. Note that the beam diameter of the laser beam is normally set to be slightly larger than the beat width by the laser heating control mechanism 511 for melting. The position control driver 624 is a driver that moves the collimation optical system 202 to a position set by the collimation optical system position controller 623.

The reflecting mirror angle controller 625 controls a target irradiation position for preheating or postheating on a heating target object in correspondence with an irradiation position by the laser heating control mechanism 511 for melting. The target irradiation position for preheating or postheating is set based on the material of a heating target object to be laminated and shaped, the lamination thickness, the scan speed, and the like, in addition to the irradiation position by the laser heating control mechanism 511 for melting. The angle control driver 626 is a driver for setting the first movable reflecting mirror 204 at an angle set by the reflecting mirror angle controller 625. The angle control driver 627 is a driver for setting the second movable reflecting mirror 205 at an angle set by the reflecting mirror angle controller 625.

Note that an arrow to each controller represents a feedback signal when performing feedback control. The feedback signal is unnecessary when no feedback control is performed.

In Fig. 6B, each controller of the laser heating controller 220 is illustrated as if it were not connected to the outside. However, a host controller, for example, the shaping controller 601 may perform integral control.

In the above description, a change of the vertical distance to a heating target object by the laser heating control mechanism 511 for melting is not mentioned. However, when changing the vertical distance to the heating target object in control of the irradiation range of a laser beam for melting, the collimation optical system position controller 623 and the reflecting mirror angle controller 625 further require control along with the change of the vertical position.

(Data Structure)

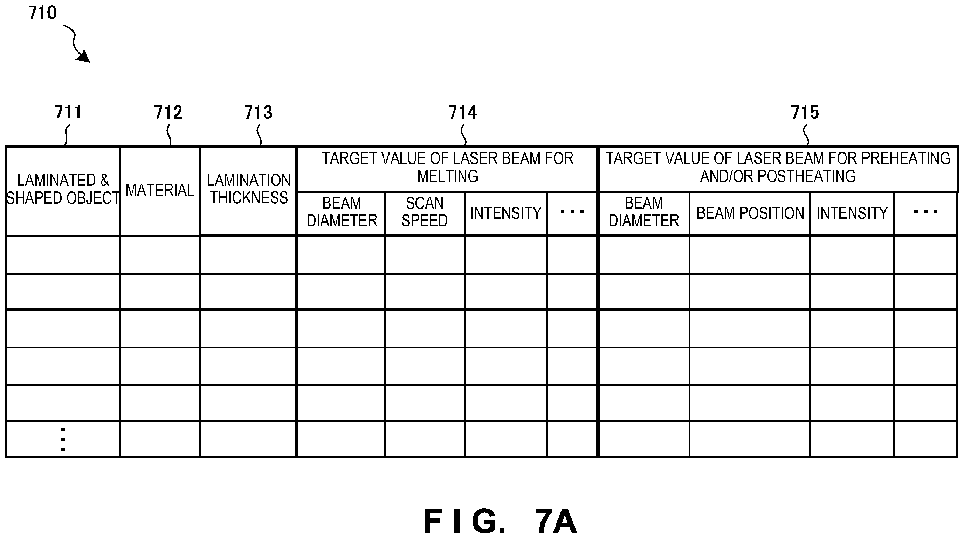

Fig. 7A is a table showing the structure of data used by the laser heating controller 220 according to this embodiment. Fig. 7A shows a target value setting table 710 used to set a target value by each controller in Fig. 6B.

In Fig. 7A, a target value 714 of a laser beam for melting and a target value 715 of a laser beam for preheating or postheating are stored based on a target laminated and shaped object 711, lamination material 712, and lamination thickness 713 and the like. The target value 714 of the laser beam for melting includes a beam diameter, a scan speed, the intensity of a laser beam, and the like. The target value 715 of the laser beam for preheating or postheating includes a beam diameter, a beam position, the intensity of a laser beam, and the like.

The target value of each controller may be calculated by an arithmetic operation, or may be calculated in advance, held in a table, and read out.

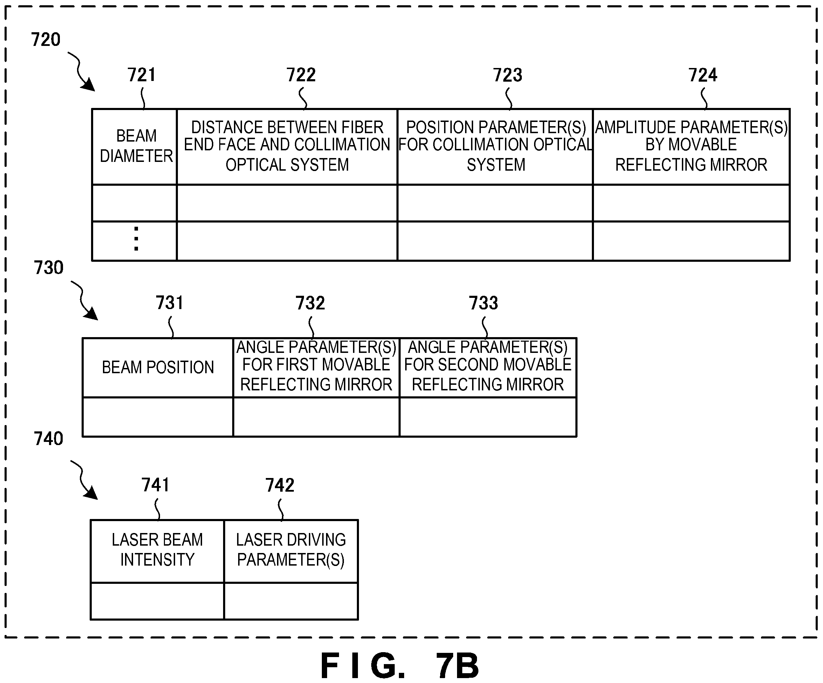

Fig. 7B is a table showing the structure of data used by the laser heating controller 220 according to this embodiment. The data in Fig. 7B are used to decide parameters for implementing the respective target values in Fig. 7A. Note that Fig. 7B shows, as parameters related to the laser heating control mechanism 200 for preheating or postheating according to this embodiment, a beam diameter-related parameter 720, a beam position-related parameter 730, and a laser beam intensity-related parameter 740.

The beam diameter-related parameter 720 stores a distance 722 between the fiber end face and the collimation optical system, and a position parameter(s) 723 for the collimation optical system used to set the distance 722, in order to implement a target beam diameter 721. As for a range not covered by the position parameter(s) 723 for the collimation optical system, an amplitude parameter(s) 724 by the movable reflecting mirror is stored.

The beam position-related parameter 730 stores an angle parameter(s) 732 for the first movable reflecting mirror and an angle parameter(s) 733 for the second movable reflecting mirror, in order to implement a target beam position 731.

The laser beam intensity-related parameter 740 stores a laser driving parameter(s) 742 in order to implement a target laser beam intensity 741.

The parameter of each driver may be calculated by an arithmetic operation, or may be calculated in advance, held in a table, and read out.

<<Processing Procedures of Laser Heating Controller>>

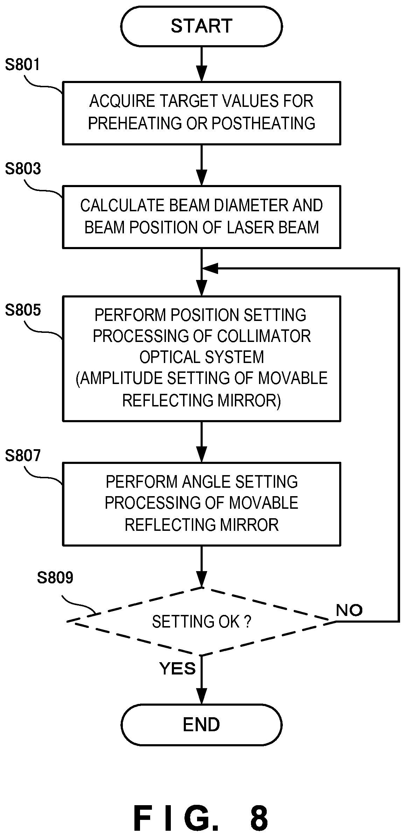

Fig. 8 is a flowchart showing the processing procedures of the laser heating controller 220 according to this embodiment. A laser heating control program represented by this flowchart is executed using a memory by the CPU (Central Processing Unit) of the laser heating controller 220 in Fig. 6B, thereby implementing the functional building units in Fig. 6B.

In step S801, the laser heating controller 220 acquires target values for preheating or postheating. In step S803, the laser heating controller 220 calculates (or reads out) the beam diameter and beam position of a laser beam based on the acquired target values for preheating or postheating. In step S805, the laser heating controller 220 executes collimator optical system position setting processing. If necessary, the amplitude setting of the movable reflecting mirror may be performed. In step S807, the laser heating controller 220 executes movable reflecting mirror angle setting processing. If no feedback processing is performed, the setting processing of the laser heating controller 220 ends.

If feedback processing is performed, the laser heating controller 220 then determines in step S809 whether the position or amplitude and the angle have been set to the target values. If the position or amplitude and the angle have not been set to the target values, the laser heating controller 220 returns to step S805 to repeat the setting processing. If the position or amplitude and the angle have been set to the target values, the setting processing of the laser heating controller 220 ends.

According to the second embodiment, the beam diameter of a laser beam on a heating target object is controlled by one collimation optical system, and the beam position is controlled by the movable reflecting mirror. Thus, proper adjustment of preheating or postheating can be performed by a simple operation.

More specifically, the beam diameter on the surface of a heating target object to be preheated or postheated is controlled by moving the position of one collimation optical system constituted by a plurality of lenses so as to adjust the distance between the collimation optical system and the opening end face of the optical fiber for transmitting a laser beam. An appropriate beam diameter can therefore be obtained by a simple operation.

Also, the fixed reflecting mirror and the movable reflecting mirror are provided between the collimation optical system and the surface of a heating target object, and the beam position is controlled by adjusting the rotation position of the movable reflecting mirror. Setting to an appropriate beam position can be performed by a simple operation.

If the beam diameter does not reach a desired diameter, the beam is oscillated by the movable reflecting mirror to ensure a desired beam diameter. Various beam diameters can therefore be obtained by a simple operation.

Further, the intensity of a laser beam is controlled in consideration of the material of a heating target object, the shaped object, the lamination thickness, the beam diameter, the scan speed, and the like. Accordingly, more accurate adjustment of preheating or postheating can be performed by a simple operation.

[Third Embodiment]

A laser heating assembly according to the third embodiment of the present invention will be explained next. The laser heating assembly according to the third embodiment is different from the laser heating assembly according to the second embodiment in that the positional relationship between the laser heating mechanism for melting and the laser heating mechanism for preheating or postheating is reversed. The remaining arrangement and operation are the same as those in the second embodiment, so the same reference numerals denote the same arrangement and operation and a detailed description thereof will not be repeated.

<<Laser Heating Assembly>>

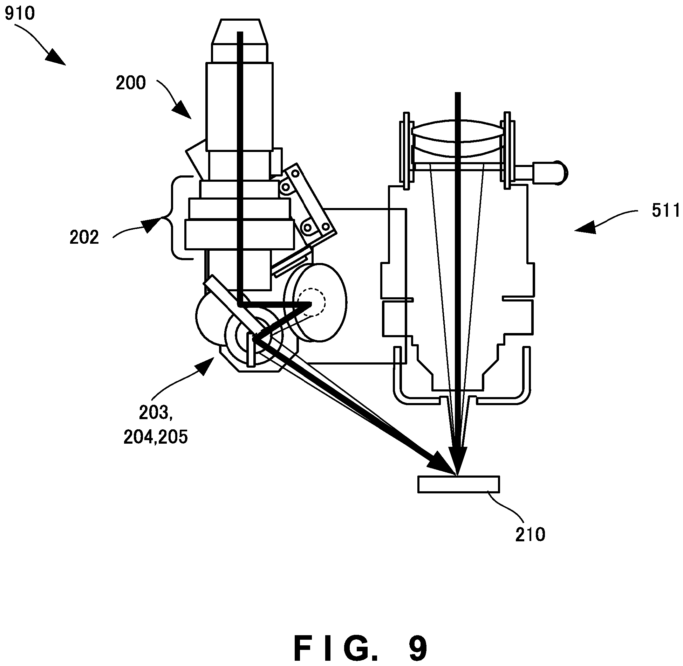

Fig. 9 is a view showing the arrangement of a laser heating assembly 910 according to this embodiment. Note that the same reference numerals as those in Fig. 5A denote the same parts, and a description thereof will not be repeated.

The arrangement in Fig. 9 is different from the arrangement in Fig. 5A according to the second embodiment in that only the positional relationship between a laser heating control mechanism 511 for melting and a laser heating control mechanism 200 for preheating or postheating is reversed, and the remaining parts are the same.

Note that the positional relationship between the laser heating mechanism for melting and the laser heating mechanism for preheating or postheating is not limited to the positional relationship in Fig. 9, and can be freely set.

According to the third embodiment, even when the positional relationship between the laser heating mechanism for melting and the laser heating mechanism for preheating or postheating is freely changed, proper adjustment of preheating or postheating can be performed by a simple operation.

[Other Embodiments]

The present invention has been described above with reference to the embodiments. However, the present invention is not limited to those embodiments. Various changes understandable by those skilled in the art within the scope of the present invention can be made for the arrangements and details of the present invention. The present invention also incorporates a system or apparatus that somehow combines different features included in the respective embodiments.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention on the computer, a medium storing the program, and a WWW (World Wide Web) server that causes a user to download the control program. Especially, a non-transitory computer readable medium storing a program for causing a computer to execute processing steps included in the above-described embodiments falls within the scope of the present invention.

**Claims**

1. A laser heating control mechanism for one of preheating and postheating of a heating target object, comprising:

   an optical fiber that transmits a laser beam and radiates the laser beam from an opening end face;
   a collimation optical system that fucuses the laser beam radiated from the opening end face onto the heating target object; and
   an irradiation range adjustment mechanism that adjusts a distance between the opening end face and said collimation optical system along an irradiation axis of the laser beam so as to irradiate the heating target object with the laser beam at a predetermined beam diameter.

2. The laser heating control mechanism according to claim 1, wherein said irradiation range adjustment mechanism adjusts a position of said collimation optical system with respect to the fixed opening end face.

3. The laser heating control mechanism according to claim 1 or 2, wherein the laser beam is lower in energy than a laser beam for melting the heating target object to be used as one of a laser beam for preheating the heating target object and a laser beam for postheating the heating target object.

4. The laser heating control mechanism according to any one of claims 1 to 3, further comprising a focusing position adjustment mechanism that is provided between said collimation optical system and the heating target object to adjust a focusing position of the laser beam on the heating target object.

5. A three-dimensional shaping apparatus comprising:

   a laser heating control mechanism according to any one of claims 1 to 4; and
   a melting laser heating control mechanism that melts the heating target object.

6. A laser heating control method in a laser heating mechanism for one of preheating and postheating of a heating target object, the laser heating mechanism including an optical fiber that transmits a laser beam and radiates the laser beam from an opening end face, and a collimation optical system that fucuses the laser beam radiated from the opening end face onto the heating target object, the method comprising:

   adjusting a distance between the opening end face and the collimation optical system along an irradiation axis of the laser beam so as to irradiate the heating target object with the laser beam at a predetermined beam diameter; and
   adjusting a focusing position of the laser beam on the heating target object by a reflecting mirror provided between the collimation optical system and the heating target object.

7. A laser heating control program in a laser heating mechanism for one of preheating and postheating of a heating target object, the laser heating mechanism including an optical fiber that transmits a laser beam and radiates the laser beam from an opening end face, and a collimation optical system that fucuses the laser beam radiated from the opening end face onto the heating target object, the program causing a computer to execute:

   adjusting a distance between the opening end face and the collimation optical system along an irradiation axis of the laser beam so as to irradiate the heating target object with the laser beam at a predetermined beam diameter; and
   adjusting a focusing position of the laser beam on the heating target object by a reflecting mirror provided between the collimation optical system and the heating target object.

IRRADIATION RANGE ADJUSTMENT MECHANISM — 103

100

101

D

101a

102

110

**F I G.  1**

**FIG. 2**

200

201

220

LASER
HEATING
CONTROLLER

240    230

250

210    204    205    203

202

FIBER END FACE

DISTANCE D BETWEEN COLLIMATION
OPTICAL SYSTEM AND FIBER END FACE

UPPER SURFACE OF LENS OF
COLLIMATION OPTICAL SYSTEM

RELATION BETWEEN BEAM DIAMETER d AND
DISTANCE D BETWEEN FIBER END FACE AND LENS

APPROXIMATE VALUE OF MINOR AXIS OF IRRADIATION SPOT (ELLIPSE)
$$d_s = (L1^2 + L2^2)^{1/2}$$
INTERMEDIATE CALCULATED NUMERICAL VALUES
$$L1 = c \times m$$
$$L2 = D \times m \times (m\text{-}1)\} \times 2 \times a / m, \quad D = z \text{-} z_0$$
VARIABLE · VARIABLE
$z$ ... COORDINATE VALUE [mm] OF FOCUS ADJUSTMENT STAGE
$z_0$ ... REFERENCE COORDINATE [mm] of FOCUS ADJUSTMENT STAGE
$m = 4.7$ ... OPTICAL SYSTEM MAGNIFICATION
$a = 0.1$ ... FIBER EXIT NA (1/e2)
$c = 0.2$ ... FIBER CORE DIAMETER

**F I G. 3A**

EP 3 153 273 A1

$$\frac{Lf_2}{Lf_1} = \frac{d}{c}$$

# FIG. 3B

210

410

1mm~4mm（$d_s$）

# F I G.  4

510

511

200

202

203,
204,205

210

# F I G.  5A

F I G. 5B

EP 3 153 273 A1

**FIG. 6A**

**220**

LASER HEATING CONTROLLER

**621**

LASER BEAM
INTENSITY
CONTROLLER

**622**

LASER DRIVING
DRIVER

TO/FROM
LASER OSCILLATOR

**623**

COLLIMATION OPTICAL
SYSTEM POSITION
CONTROLLER

**624**

POSITION
CONTROL DRIVER

TO/FROM
COLLIMATION
OPTICAL SYSTEM
**202**

**625**

REFLECTING MIRROR
ANGLE CONTROLLER

**626**

ANGLE CONTROL
DRIVER

**627**

ANGLE CONTROL
DRIVER

TO/FROM
MOVABLE
REFLECTING
MIRROR
**204,205**

# F I G.  6B

710

| LAMINATED & SHAPED OBJECT | MATERIAL | LAMINATION THICKNESS | TARGET VALUE OF LASER BEAM FOR MELTING | | | | TARGET VALUE OF LASER BEAM FOR PREHEATING AND/OR POSTHEATING | | | |
|---|---|---|---|---|---|---|---|---|---|---|
| | | | BEAM DIAMETER | SCAN SPEED | INTENSITY | · · · | BEAM DIAMETER | BEAM POSITION | INTENSITY | · · · |
| | | | | | | | | | | |
| | | | | | | | | | | |
| | | | | | | | | | | |
| | | | | | | | | | | |
| | | | | | | | | | | |
| ⋮ | | | | | | | | | | |

711 712 713 714 715

**F I G. 7A**

| 720 | | | |
|---|---|---|---|
| 721 | 722 | 723 | 724 |
| BEAM DIAMETER | DISTANCE BETWEEN FIBER END FACE AND COLLIMATION OPTICAL SYSTEM | POSITION PARAMETER(S) FOR COLLIMATION OPTICAL SYSTEM | AMPLITUDE PARAMETER(S) BY MOVABLE REFLECTING MIRROR |
| | | | |
| ⋮ | | | |

| 730 | | |
|---|---|---|
| 731 | 732 | 733 |
| BEAM POSITION | ANGLE PARAMETER(S) FOR FIRST MOVABLE REFLECTING MIRROR | ANGLE PARAMETER(S) FOR SECOND MOVABLE REFLECTING MIRROR |
| | | |

| 740 | |
|---|---|
| 741 | 742 |
| LASER BEAM INTENSITY | LASER DRIVING PARAMETER(S) |
| | |

**F I G. 7B**

START

S801 → ACQUIRE TARGET VALUES FOR PREHEATING OR POSTHEATING

S803 → CALCULATE BEAM DIAMETER AND BEAM POSITION OF LASER BEAM

S805 → PERFORM POSITION SETTING PROCESSING OF COLLIMATOR OPTICAL SYSTEM (AMPLITUDE SETTING OF MOVABLE REFLECTING MIRROR)

S807 → PERFORM ANGLE SETTING PROCESSING OF MOVABLE REFLECTING MIRROR

S809 → SETTING OK ?  NO

YES

END

F I G. 8

**F I G. 9**

910

200

202

203,
204,205

511

210

## INTERNATIONAL SEARCH REPORT

| International application No. |
|---|
| PCT/JP2015/058784 |

**A.  CLASSIFICATION OF SUBJECT MATTER**
*B23K26/34(2014.01)i, B23K26/21(2014.01)i, B29C67/00(2006.01)i*

According to International Patent Classification (IPC) or to both national classification and IPC

**B.  FIELDS SEARCHED**

Minimum documentation searched (classification system followed by classification symbols)
B23K26/34, B23K26/21, B29C67/00

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y<br>A | JP 2000-301376 A  (General Electric Co.),<br>31 October 2000 (31.10.2000),<br>paragraphs [0013] to [0026], [0033] to [0035],<br>[0039]; fig. 1 to 2, 4<br>& US 6191379 B1 | 1-4,6-7<br>5 |
| Y | JP 2002-069507 A  (Hitachi, Ltd.),<br>08 March 2002 (08.03.2002),<br>paragraphs [0001], [0015] to [0024]; fig. 1 to<br>8<br>(Family: none) | 1-7 |
| Y<br>A | JP 09-182983 A  (Kawasaki Heavy Industries,<br>Ltd.),<br>15 July 1997 (15.07.1997),<br>paragraphs [0047] to [0051]; fig. 10<br>(Family: none) | 1-4,6-7<br>5 |

| ☒ Further documents are listed in the continuation of Box C. | ☐ See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    08 June 2015 (08.06.15) | Date of mailing of the international search report<br>    23 June 2015 (23.06.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

| International application No. |
| --- |
| PCT/JP2015/058784 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2014/061438 A1  (Sumitomo Electric Industries, Ltd.), 24 April 2014 (24.04.2014), paragraphs [0026] to [0033]; fig. 5 to 6 (Family: none) | 1-7 |
| Y | JP 2012-091217 A  (Mitsubishi Heavy Industries, Ltd.), 17 May 2012 (17.05.2012), paragraphs [0026] to [0048]; fig. 1 to 3 (Family: none) | 1-7 |
| Y | JP 2009-226473 A  (Amada Co., Ltd.), 08 October 2009 (08.10.2009), paragraphs [0034] to [0044]; fig. 1 to 2 (Family: none) | 1-7 |
| Y A | JP 2007-181840 A  (Daihen Corp.), 19 July 2007 (19.07.2007), paragraphs [0017] to [0019]; fig. 1 (Family: none) | 1-3,5-7 4 |
| Y A | JP 2010-214393 A  (Nissan Motor Co., Ltd.), 30 September 2010 (30.09.2010), paragraphs [0018] to [0034]; fig. 1 to 2 & WO 2010/103357 A1    & US 2011/0297654 A1 & KR 10-2011-0124290 A  & CN 102307697 A | 6-7 1-5 |
| Y A | JP 2009-208093 A  (Sunx Ltd.), 17 September 2009 (17.09.2009), paragraphs [0011] to [0014]; fig. 1 (Family: none) | 6-7 1-5 |
| Y A | JP 2009-148781 A  (Mazda Motor Corp.), 09 July 2009 (09.07.2009), paragraphs [0018] to [0021]; fig. 1 (Family: none) | 6-7 1-5 |
| A | US 2008/0173386 A1  (ROLLS-ROYCE PLC), 24 July 2008 (24.07.2008), entire text; all drawings & EP 1887107 A2 | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10128854 A
- JP 2002069507 A